# EUROPEAN PATENT APPLICATION

(11) **EP 4 776 403 A1**
(43) Date of publication of application: **15.07.2026**
(21) Application number: 25864609.0
(22) Date of filing: 11.07.2025
(51) Int. Cl.: H01M 50/227, H01M 10/653, H01M 10/6554, H01M 50/244, H01M 10/658, H01M 50/209, H01M 50/502, H01M 50/342, H01M 50/367, H01M 10/48

(54) **BATTERY PACK AND VEHICLE INCLUDING SAME**

(30) Priority: 24.10.2024 KR 20240146544 U
(71) Applicant: LG Energy Solution, Ltd., Seoul 07335 (KR)
(72) Inventor: PARK, Won Kyoung, Daejeon 34122 (KR); KIM, Younggil, Daejeon 34122 (KR); JUNG, Kitaek, Daejeon 34122 (KR)
(74) Representative: BCKIP Part mbB
(86) International application number: PCT/KR2025/010137
(87) International publication number: WO 2026/089203

(57) **Abstract**

A battery pack includes a plurality of battery cell assemblies, each including a battery cell and a cell cover covering three surfaces of the battery cell except for a lower surface; an upper case to which the plurality of battery cell assemblies are separately detachably coupled; and a lower case coupled to the upper case and covering a lower surface of the plurality of battery cell assemblies and formed of a transparent material. (Representative figure: FIG. 3)

## Description

### [TECHNICAL FIELD]

The disclosure relates to a battery pack and a vehicle including the same.

### [BACKGROUND ART]

Secondary batteries, which have high applicability according to product groups and electrical characteristics, such as high energy density, have been universally applied not only to portable devices but also to electric vehicles (EVs) or hybrid electric vehicles (HEVs) driven by electric power sources.

These secondary batteries have the primary advantage of being able to drastically reduce the use of fossil fuels, as well as the advantage of not generating any byproducts from the use of energy, and are thus have come to prominence as a new energy source for improving environmental friendliness and energy efficiency.

Previously, nickel-cadmium batteries or nickel-hydrogen batteries have been widely used as secondary batteries, but recently, lithium secondary batteries have been widely used because they have almost no memory effect compared to nickel-based secondary batteries and thus are freely charged and discharged, have a very low self-discharge rate, and have a high energy density.

These lithium secondary batteries mainly use lithium-based oxides and carbon materials as positive and negative electrode active materials, respectively. Lithium secondary batteries include an electrode assembly in which a positive electrode plate and a negative electrode plate, each of which is coated with a positive electrode active material and a negative electrode active material, are arranged with a separator therebetween and an outer casing, i.e., a battery case, which seals and stores the electrode assembly together with an electrolyte.

In general, secondary batteries may be classified as can-type batteries in which the electrode assembly is embedded in a metal can and pouch-type batteries in which the electrode assembly is embedded in a pouch formed of aluminum laminate sheet, depending on the shape of the outer casing.

Recently, battery packs have been widely used in medium- and large-sized devices, such as electric vehicles and energy storage systems (ESS). A battery pack includes one or more battery modules inside a pack case and a controller that controls charging and discharging of the battery pack, such as a battery management system (BMS). Here, the battery module is configured to include a plurality of battery cells inside a module case. That is, in the case of the related art battery pack, a plurality of battery cells are received inside a module case to form each battery module, and one or more of these battery modules are received inside a pack case to form a battery pack.

In particular, in the case of pouch-type batteries, although they have many advantages, such as being light in weight and having less dead space when stacked, they are vulnerable to external impacts and have somewhat poor assembly performance. Therefore, battery packs are generally manufactured by first modularizing a plurality of battery cells and then receiving them inside a pack case.

However, such battery packs may be disadvantages in terms of energy density, assembly, cooling performance, etc. due to modularization. Specifically, in the process of receiving a plurality of battery cells inside a module case for modularization, the volume of the battery pack may unnecessarily increase or the space occupied by the battery cells may decrease due to various components, such as the module case or a frame for stacking. In addition, since the process of modularizing a plurality of battery cells to first configure a battery module and then receiving the battery module in the pack case is performed, there is also the problem that the manufacturing process of the battery pack becomes complicated. Since the module case is received inside the pack case and the battery cells are received inside the module case, in the case of discharging heat of the battery cells received inside the module case to the outside of the pack case through the module case, the cooling efficiency may decrease and a cooling structure may become complicated.

In order to improve this, that is, to increase the energy density of the battery pack, if the existing cell-to-pack (CTP) method of directly mounting a plurality of battery cells in the pack case of the battery pack is applied to a pouch-type battery cell with a soft case, it may be difficult to handle or stack a plurality of battery cells at the same time and there may be a risk of damage to the battery cells during the process of mounting the battery cells in the pack case.

In addition, since the battery cells are fixed inside the pack case using an adhesive material, such as resin, there is a problem that it is difficult to replace the battery cells after mounting the battery cells.

### [DETAILED DESCRIPTION OF INVENTION]

### [TECHNICAL PROBLEMS]

The disclosure provides a battery pack in which whether a plurality of battery cells are abnormal may be easily diagnosed and a battery cell in which an abnormality has occurred among the plurality of battery cells may be selectively replaced.

In addition, the disclosure provides a vehicle including the aforementioned battery pack.

However, the technical problem to be solved by the disclosure is not limited to the above-described problem, and other problems not mentioned may be clearly understood by those skilled in the art from the description of the invention given below.

### [TECHNICAL SOLUTION]

According to an embodiment of the present disclosure, a battery pack includes a plurality of battery cell assemblies, each including a battery cell and a cell cover covering three surfaces of the battery cell except for a lower surface; an upper case to which the plurality of battery cell assemblies are separately detachably coupled; and a lower case coupled to the upper case and covering a lower surface of the plurality of battery cell assemblies and formed of a transparent material.

The cell cover may include a first cover portion covering one side surface of the battery cell; a second cover portion covering the other side surface of the battery cell; and a third cover portion connecting the first cover portion and the second cover portion and covering an upper surface of the battery cell.

The plurality of battery cell assemblies may each further include a non-adhesive thermal interface material (TIM) interposed between the third cover portion of the cell cover and the battery cell.

The cell cover may further include a cover coupling portion formed to extend from each of a front end portion and a rear end portion of the third cover portion.

The battery pack may further include a plurality of coupling bolts detachably coupling the cover coupling portion of the cell cover and the upper case.

The battery pack may further include a cooling plate coupled to end portions of the plurality of coupling bolts penetrating through the upper case from the outside of the upper case.

The plurality of coupling bolts and the cooling plate may be formed of a thermally conductive material.

The plurality of battery cell assemblies may be stacked with sides surfaces facing each other, wherein the battery pack may further include an insulating plate interposed between the cell covers of the plurality of stacked battery cell assemblies.

The battery pack may further include a busbar coupled to a lower surface of the battery cell and a busbar frame supporting the busbar.

The cell cover may be detachably coupled to the busbar frame using a snap-fit method.

The lower case may be provided with a plurality of cell inspection holes for inspecting the battery cell and a plurality of vent holes for gas discharge.

The battery pack may further include a terminal nut coupled to the lower surface of the battery cell through the plurality of cell inspection holes of the lower case.

The battery pack may further include a lower cover member detachably attached to an outer surface of the lower case and covering the plurality of cell inspection holes.

A space formed by the upper case and the lower case may include a cell accommodation region accommodating the plurality of battery cell assemblies and a venting region provided on at least one side among both sides of the cell accommodation region for gas discharge.

The battery pack may further include one or more of a battery management system (BMS) and a battery disconnect unit (BDU) accommodated within a space formed by the upper case and the lower case.

According to an embodiment of the present disclosure, there is provided a vehicle including at least one of the battery pack according to the embodiment described above.

### [EFFECT OF INVENTION]

According to the disclosure, whether a plurality of battery cells are abnormal may be easily diagnosed and a battery cell in which an abnormality has occurred among the plurality of battery cells may be selectively replaced.

However, the effects that may be obtained through the disclosure are not limited to the effects described above, and other technical effects that are not mentioned may be clearly understood by those skilled in the art from the description of the invention given below.

### [BRIEF DESCRIPTION OF THE DRAWING]

The following drawings attached to this specification illustrate preferred embodiments of the disclosure, and serve to further understand the technical idea of the disclosure together with the detailed description of the invention given below, so the disclosure should not be interpreted as being limited to matters described in such drawings.
FIG. 1 is a front perspective view of a battery pack according to an embodiment of the disclosure.
FIG. 2 is a rear perspective view of the battery pack of FIG. 1.
FIG. 3 is a front exploded perspective view of the battery pack of FIG. 2.
FIG. 4 is an enlarged perspective view of the battery cell of FIG. 3.
FIG. 5 is an enlarged exploded perspective view of a battery cell assembly of FIG. 3.
FIG. 6 is an exploded perspective view illustrating a state in which the battery cell assembly of FIG. 5 is accommodated and coupled in an upper case.
FIG. 7 is a view illustrating a structure in which heat of a battery cell is released through a cooling plate in FIG. 6.
FIG. 8 is a perspective view illustrating a state in which a busbar and a busbar frame are coupled to the upper case accommodating the battery cell assembly of FIG. 6.
FIG. 9 is a view illustrating a state in which a cell cover and the busbar frame of FIG. 8 are coupled.
FIG. 10 is a perspective view illustrating a state in which a battery management system (BMS) and a battery disconnect unit (BDU) are accommodated together in the upper case accommodating the battery cell assembly of FIG. 8.
FIG. 11 is an exploded perspective view illustrating a state in which a lower case is coupled to the upper case accommodating the battery cell assembly of FIG. 8.
FIG. 12 is a plan view illustrating a plurality of cell inspection holes and a plurality of vent holes formed in the lower case of FIG. 11.
FIG. 13 is a perspective view illustrating a state in which a lower cover member is attached to the lower case of FIG. 11.
FIG. 14 is a view illustrating a vehicle including at least one battery pack of FIG. 1.

### [BEST MODE FOR CARRYING OUT THE INVENTION]

The advantages and features of the disclosure and the methods for achieving them will become apparent by referring to the embodiments described in detail below together with the accompanying drawings. However, the disclosure is not limited to the embodiments disclosed below but may be implemented in various different forms, and these embodiments are provided only to make the disclosure of the disclosure complete and to fully inform those skilled in the art of the scope of the invention, and the disclosure is defined only by the scope of the claims. Accordingly, in some embodiments, well-known process steps, well-known device structures, and well-known techniques are not specifically described in order to avoid ambiguity in the interpretation of the disclosure. Like reference numerals refer to like elements throughout the specification.

In the drawings, the thickness of layers, films, panels, regions, etc., are exaggerated for clarity. The various Figures are thus not to scale. Like reference numerals designate like elements throughout the specification. It will be understood that when an element, such as a layer, film, region, or substrate is referred to as being "on" another element, it may be directly on the other element or intervening elements may also be present. In contrast, when an element is referred to as being "directly on" another element, there are no intervening elements present. In addition, it will be understood that when an element, such as a layer, film, region, or substrate is referred to as being "below" another element, it may be directly below the other element or intervening elements may also be present. In contrast, when an element is referred to as being "directly under" another element, there are no intervening elements present.

Throughout the specification, unless otherwise specifically stated, each element may be singular or plural.

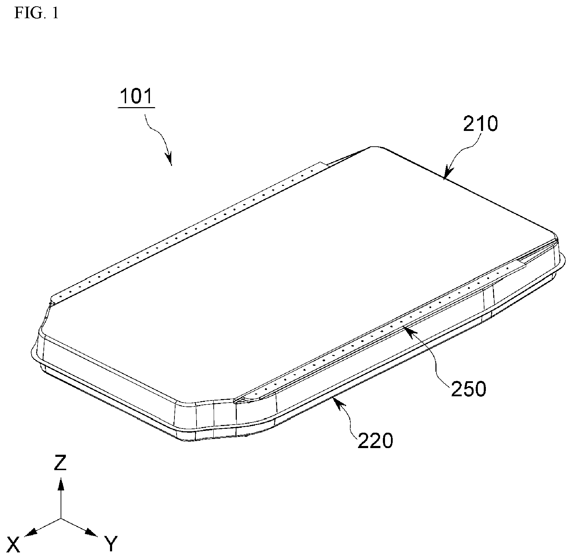

A battery pack 101 according to an embodiment of the disclosure will be described with reference to FIGS. 1 to 13.

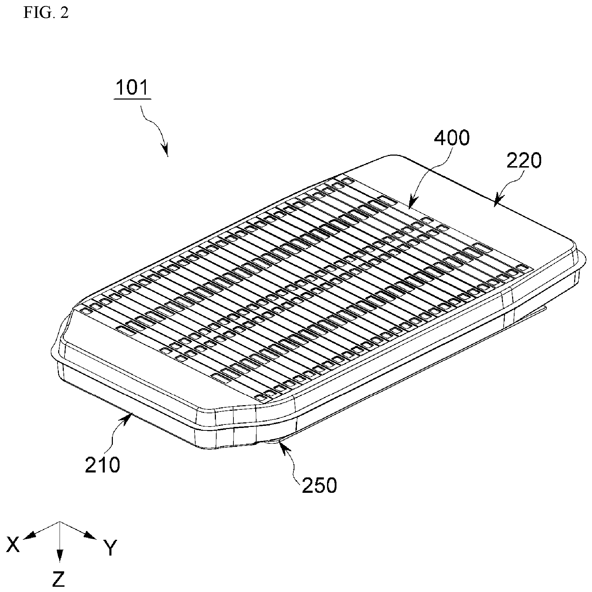

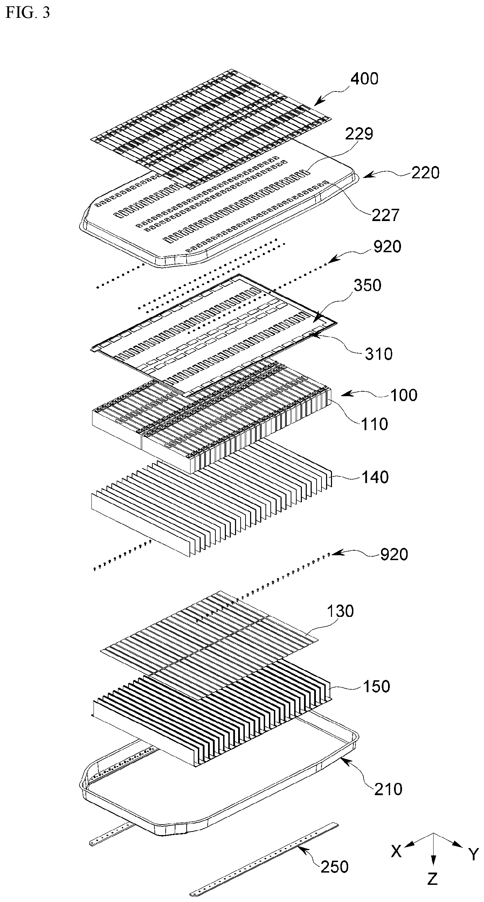

FIG. 1 is a front perspective view of a battery pack 101 according to an embodiment of the disclosure, FIG. 2 is a rear perspective view of the battery pack 101, and FIG. 3 is a rear exploded perspective view of the battery pack 101.

Referring to FIGS. 1 to 3, the battery pack 101 according to an embodiment of the disclosure includes a plurality of battery cell assemblies 100, an upper case 210, and a lower case 220.

In addition, the battery pack 101 according to an embodiment of the disclosure may further include a coupling bolt 910, a terminal nut 920, a cooling plate 250, an insulating plate 140, a busbar 310, a busbar frame 350, a lower cover member 400, a battery management system (BMS) 710, and a battery disconnect unit (BDU) 720.

The plurality of battery cell assemblies 100 each include a battery cell 110 and a cell cover 150 covering three surfaces of the battery cell 110 except for a lower surface.

The plurality of battery cells 110 may be stacked in a lateral direction. In addition, the plurality of stacked battery cells 110 may be electrically connected by the busbar 310 to be described below.

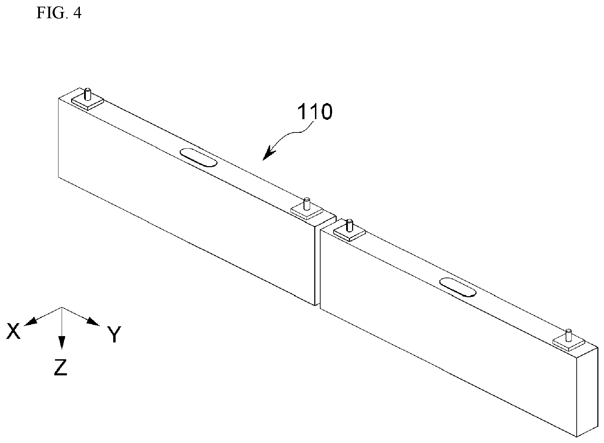

FIG. 4 is a diagram illustrating the battery cell 110. Here, the battery cell 110 is illustrated with the lower side thereof facing upward.

Referring to FIG. 4, the lateral direction in which the battery cells 110 are stacked may be the X-axis direction. In addition, a direction from the front to the rear of the battery cell 110, or the opposite direction, may be defined as a length direction of the battery cell 110. This may be the Y-axis direction in FIG. 4. In addition, a direction from an upper surface to a lower surface of the battery cell 110, or the opposite direction, may be defined as a width direction of the battery cell 110. This may be the Z-axis direction in FIG. 4.

In addition, the battery cell 110 may be, for example, a prismatic battery cell. The number of stacked prismatic battery cells per unit region may be maximized. However, the battery cell 110 is not necessarily limited to the prismatic battery cell and may be a variety of battery cells, such as a pouch type.

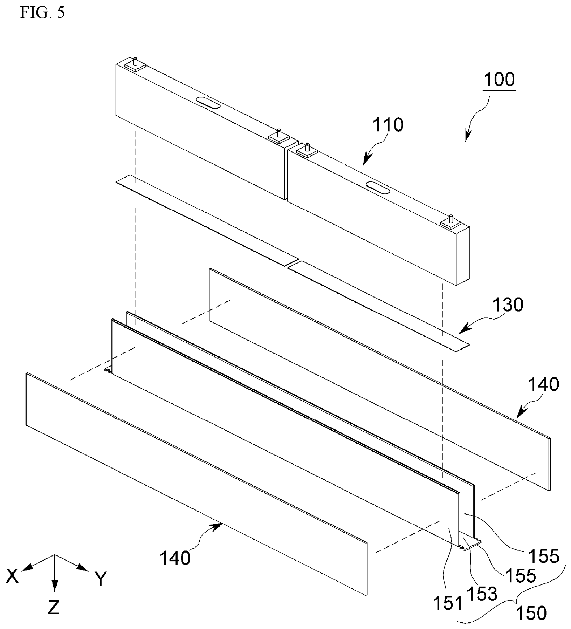

FIG. 5 is an exploded perspective view illustrating the battery cell assembly 100. Here, the battery cell assembly 100 is illustrated with the lower surface thereof facing upward.

Referring to FIG. 5, the battery cell assembly 100 may further include a thermal interface material (TIM) 130 in addition to the battery cell 110 and the cell cover 150 described above.

In addition, specifically, the cell cover 150 may include a first cover portion 151 covering one side surface of the battery cell 110, a second cover portion 152 covering the other side surface of the battery cell 110, and a third cover portion 153 connecting the first cover portion 151 and the second cover portion 152 and covering the upper surface of the battery cell 110.

That is, the third cover portion 153 may be configured to surround the upper portion of the battery cell 110 accommodated therein. Here, the third cover portion 153 may be configured in a flat shape. In this case, the third cover portion 153 may be formed to have a straight cross-section in a horizontal direction, and thus may stably and flatly cover the upper portion of the battery cell 110.

The first cover portion 151 may be configured to extend downward from one end of the third cover portion 153. For example, the first cover portion 151 may be configured to extend downward from the left end portion of the third cover portion 153. The first cover portion 151 may be configured to cover a wide surface of the battery cell 110 accommodated therein. Furthermore, the first cover portion 151 may be formed in a flat shape. Here, the first cover portion 151 may be configured to be bent from the third cover portion 153.

The second cover portion 152 may be positioned to be spaced apart from the first cover portion 151 in the horizontal direction. Also, the second cover portion 152 may be configured to extend downward from the other end of the third cover portion 153. For example, the second cover portion 152 may be configured to extend downward from the right end portion of the third cover portion 153. Also, the second cover portion 152 may be configured to cover a wide surface of the battery cell 110 accommodated therein. Furthermore, the second cover portion 152 may also be configured in a flat form, like the first cover portion 151. Here, the second cover portion 154 may also be configured to be bent from the third cover portion 156.

In this manner, the cell cover 150 may be configured by bending a metal plate having a plate structure. That is, the cell cover 150 may be configured in a form in which one plate is bent. The cell cover 150 may be configured in a form that may cover three surfaces of one battery cell 110 by bending both ends of one plate in the same direction to cover three surfaces of the single battery cell 110. In particular, the first cover portion 151, the second cover portion 152, and the third cover portion 153 provided in one cell cover 150 may be formed as one plate. That is, the first cover portion 151, the second cover portion 152, and the third cover portion 153 of the cell cover 150 may be formed integrally.

The configuration of forming a bent portion in one plate to form such a cell cover 150 may be implemented in various manners, such as press or roll forming.

As described above, the cell cover 150 may be configured to cover the three surfaces of the battery cell 110 and support the battery cell 110 in an upright state.

For example, the cell cover 150 may be configured in a '⊏' shape, a 'u' shape, or an 'n' shape surrounding three surfaces of the battery cell 110.

In addition, by the cell cover 150, the battery cells 110 may be stacked side by side in the lateral direction, that is, in the X-axis direction, while each is stood, and may be stably maintained in a standing state.

According to the battery pack 101 including the cell cover 150, a plurality of battery cell assemblies 100 may be stably accommodated inside the upper case 210 and the lower case 220 without a stacking frame, such as a plastic cartridge or a separate module case. Therefore, the space occupied by other components, such as the module case or the stacking frame or the space for securing tolerance due to the same, may be eliminated. Therefore, since the battery cells 110 may occupy more space by the amount of eliminated space, the energy density of the battery pack 101 may be further improved. In addition, according to this aspect of the disclosure, since a module case or a stacking frame, etc. are not provided, the volume and weight of the battery pack 101 may be reduced and the manufacturing process may be simplified.

In addition, since the cell cover 150 is configured to surround three surfaces of one battery cell 110, that is, since the cell cover 150 partially surrounds the battery cell 110 to form an open portion in which the lower surface of the battery cell 110 is exposed toward the lower case 220 to be described below, a structure in which a terminal or electrode lead or busbar 310 of the battery cell 110 is positioned on the lower surface of the battery cell 110 not covered by the cell cover 150 may be easily implemented. A thermal event in the battery cell 110 may mainly occur in a portion in which the electrode lead is formed or connected to the busbar 310.

Accordingly, a discharge direction of high-temperature gas or flame, etc. may be induced to the lower surface of the battery cell 110 exposed without being covered by the cell cover 150.

Also, venting gas induced to the lower surface of the battery cell 110 may be discharged through a vent hole 229 of the lower case 220 to be described below.

In this manner, if the discharge direction of high-temperature gas or flames, etc. discharged from the battery cell 110 is controlled, thermal runaway propagation between adjacent battery cells 110 may be effectively prevented. In particular, when high-temperature gas or flames, etc. are discharged from the battery cell 110 in a situation, such as thermal runaway, the discharged gas or flames may be guided toward the lower case 220 rather than the upper case 210. As a result, in cases in which an occupant is located above the battery pack 101, such as in an electric vehicle, the high-temperature gas or flames, etc. may be suppressed or delayed from moving toward the occupant.

In addition, by covering the battery cells 110 with the cell cover 150, the battery cells 110 may be strengthened, thereby improving the assembly and mechanical stability of the battery pack 101.

In addition, since the cell cover 150 is formed of a metal material having higher rigidity than the outer casing of the battery cell 110, the battery cell 110 covered by the cell cover 150 may be protected from external impact or vibration. In addition, in this case, the heat conduction performance through the cell cover 150 may be further improved, so that the cooling performance may be further improved.

For example, the cell cover 150 may be formed of a material including stainless steel (SUS) which is easy to process and has high corrosion resistance. When the cell cover 150 is formed of a steel material, such as stainless steel (SUS), the overall structure may be stably maintained when flames occur from the battery cell 110 due to a high melting point thereof. In particular, in the case of steel material, since the melting point is higher than that of aluminum material, it does not melt even when flames are emitted from the battery cell 110 and the shape may be stably maintained. Accordingly, flame propagation prevention or delay effect between battery cells 110, venting control effect, etc. may be excellently secured.

In addition, the cell cover 150 may be formed of various materials other than stainless steel (SUS) to secure rigidity. For example, the cell cover 150 may be formed of a metal material of the chromium (Cr) series. In the case of such a metal material, the stacking state of the battery cells 110 may be maintained more stably, and the battery cells 110 may be protected more safely from external impact.

As described above, according to an embodiment of the disclosure, the battery pack 101 with enhanced safety against thermal runaway, fire, and explosion, i.e., thermal safety, may be provided. For example, in the battery pack 101 including a plurality of battery cells 110, when heat is generated in some battery cells 110, propagation thereof to adjacent battery cells 110 may be stably blocked.

In addition, the cell cover 150 may further include a cover coupling portion 155 extending from each of the front end portion and the rear end portion of the third cover portion 153.

The TIM 130 may be interposed between the third cover portion 153 of the cell cover 150 and the upper surface of the battery cell 110. The TIM 130 may effectively remove and manage heat generated in the battery cell 110.

Meanwhile, there are various types of TIM 130, such as solid (gap pad), liquid (gap filler), adhesive, and putty types, but in an embodiment of the disclosure, the TIM 130, rather than an adhesive type, may be used.

In this manner, since the non-adhesive TIM 130 does not attach the cell cover 150 and the battery cell 110, the TIM 130 does not act as a limiting factor when separating the battery cell 110 from the cell cover 150 for replacement.

In addition, as described above, the plurality of battery cell assemblies 100 are stacked such that the side surfaces thereof face each other. Also, the insulating plate 140 may be interposed between the cell covers 150 of the plurality of stacked battery cell assemblies 100.

For example, the insulating plate 140 may be formed of any one insulating material among silicone resin, polyamide, and rubber.

In this manner, by interposing the insulating plate 140 between the adjacent cell covers 150, the propagation of thermal events between the battery cell assemblies 100 may be additionally suppressed.

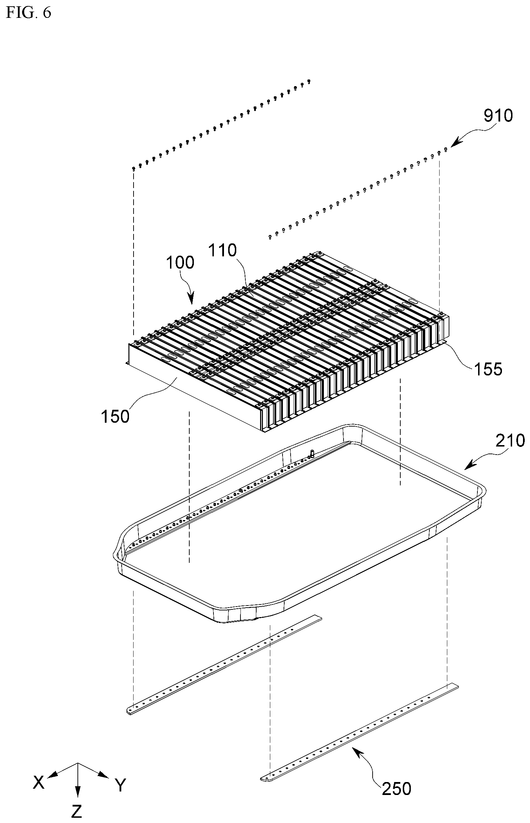

FIG. 6 is a diagram illustrating a state in which the plurality of battery cell assemblies 100 are accommodated and coupled to the upper case 210. Here, the battery cell assemblies 100 and the upper case 210 are illustrated with their lower surfaces facing upward.

Referring to FIG. 6, the plurality of battery cell assemblies 100 may be accommodated in the upper case 210, and the plurality of battery cell assemblies 100 may be detachably coupled to the upper case 210 through a plurality of coupling bolts 910.

Specifically, the plurality of coupling bolts 910 may couple the cover coupling portion 155 of the cell cover 150 to the upper case 210. That is, since one battery cell assembly 100 may be coupled to the upper case 210 through two coupling bolts 910, only one battery cell assembly 100 with a problem among the plurality of battery cell assemblies 100 may be separated by separating only two coupling bolts 910.

The cooling plate 250 may be coupled to the end portion of the plurality of coupling bolts 910 that penetrate through the upper case 210 from the outside of the upper case 210. Here, the cooling plate 250 may be provided in pairs to be connected to the cover coupling portions 155 formed at the front end portion and the rear end portion of the third cover portion 153 of the cell cover 150, respectively.

In addition, the plurality of coupling bolts 910 and the cooling plate 250 may be formed of a thermally conductive material. For example, the coupling bolts 910 and the cooling plate 250 may be formed of a metal material.

Accordingly, heat emitted from the battery cell 110 may be emitted to the outside of the battery pack 101 through the cooling plate 250 via the cover coupling portion 155 of the cell cover 150 and the coupling bolts 910.

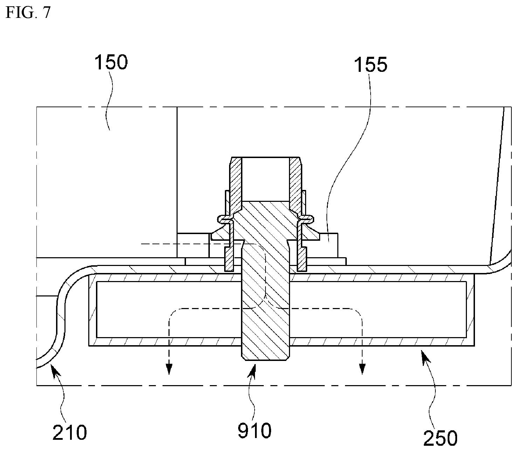

FIG. 7 is a diagram illustrating a path through which heat generated by the battery cell 110 is emitted to the outside of the battery pack 101 through the cooling plate 250.

Referring to FIG. 7, heat generated by the battery cell 110 moves to the cell cover 150 that surrounds the battery cell 110 and moves to the cover coupling portion 155 of the cell cover 150, and the heat that moves to the cover coupling portion 155 moves to the cooling plate 250 through the coupling bolt 910 and is released to the outside of the battery pack 101.

In this manner, according to an embodiment of the disclosure, heat generated by the battery cell 110 may be effectively released to the outside of the battery pack 101 to cool the battery cell 110.

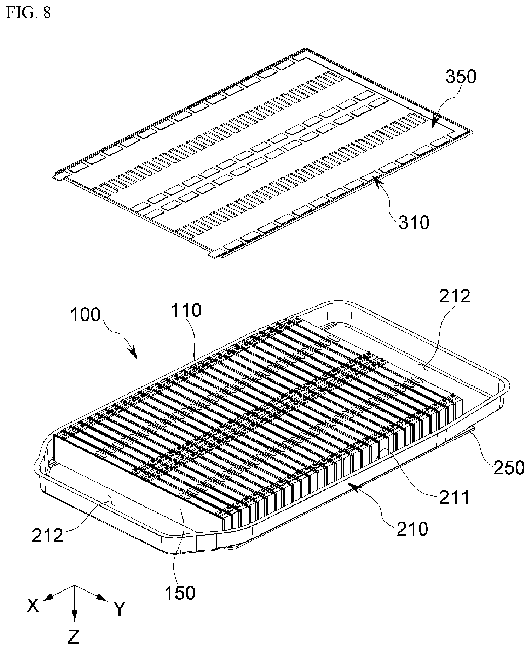

FIG. 8 illustrates a state in which the busbar 310 and the busbar frame 350 are coupled to the plurality of battery cell assemblies 100 accommodated in the upper case 210.

The busbar 310 may be coupled to the lower surface of the battery cell 110. That is, the busbar 310 is coupled to the lower surface of the battery cell 110 not covered by the cell cover 150.

Also, the busbar frame 350 may support the busbar 310. Here, the cell cover 150 may be detachably coupled to the busbar frame 350 in a snap-fit manner.

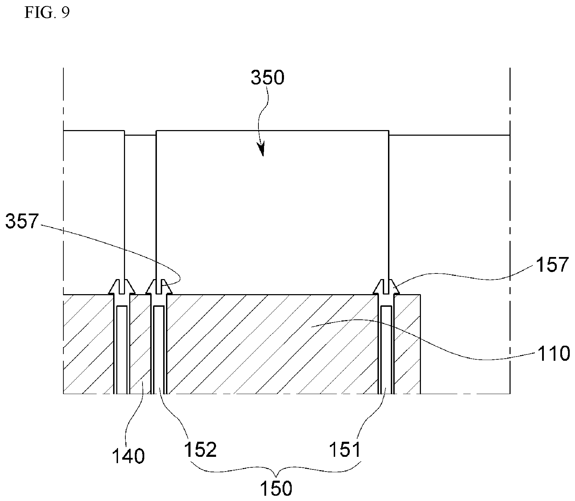

FIG. 9 exemplarily illustrates a state in which the cell cover 150 that covers the battery cell 110 is coupled to the busbar frame 350.

As illustrated in FIG. 9, the first cover portion 151 and the second cover portion 152 of the cell cover 150 have hooks 157 formed at the end portions thereof facing the busbar frame 350 and latches 357 formed at the busbar frame 350 so as to be detachably engaged with each other.

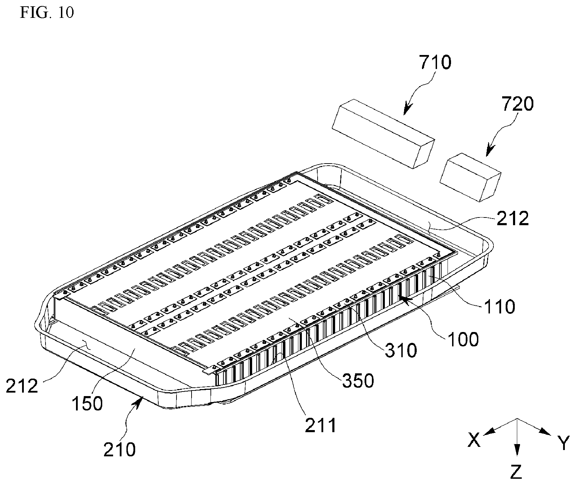

FIG. 10 illustrates a state in which at least one of the BMS 710 and the BDU 720 is accommodated in the upper case 210.

As illustrated in FIG. 10, at least one of the BMS 710 and the BDU 720 may be accommodated in a space formed by the upper case 210 and the lower case 220 to be described below.

For example, an accommodation space formed by the upper case 210 and the lower case 220 to be described below may include a cell accommodation region 211 that accommodates the plurality of battery cell assemblies 100 and a venting region 212 provided on at least one side among both sides of the cell accommodation region 211 for gas discharge. In addition, the BMS 710 and the BDU 720 may be accommodated in this venting region 212.

The BMS 710 may control the charging and discharging of the battery pack 101.

Specifically, the BMS 710 may be configured to control an overall charging and discharging operation or data transmission and reception operation of the battery cell 110. The BMS 710 may be provided to control the charging and discharging state, power state, and performance state of the battery cell 110 through a pack voltage and pack current. The BMS 710 may estimate a state of the battery cell 110 in the battery pack 101 and manage the battery pack 101 using the estimated state information. For example, the BMS 710 may estimate and manage the state information of the battery pack 101, such as a state of charge (SoC), state of health (SoH), maximum input/output power allowance, and output voltage of the battery pack 101. In addition, by using the state information, it is possible to control the charging or discharging of the battery pack 101, and furthermore, to estimate a replacement time of the battery pack 101.

The BDU 720 may be configured to control the electrical connection of the battery cells 110 to manage power capacity and function of the battery pack 101. To this end, the BDU 720 may include a power relay, a current sensor, a fuse, etc. The BDU 720 is a component provided to each pack unit, and various disconnect units known at the time of filing of the disclosure may be applied.

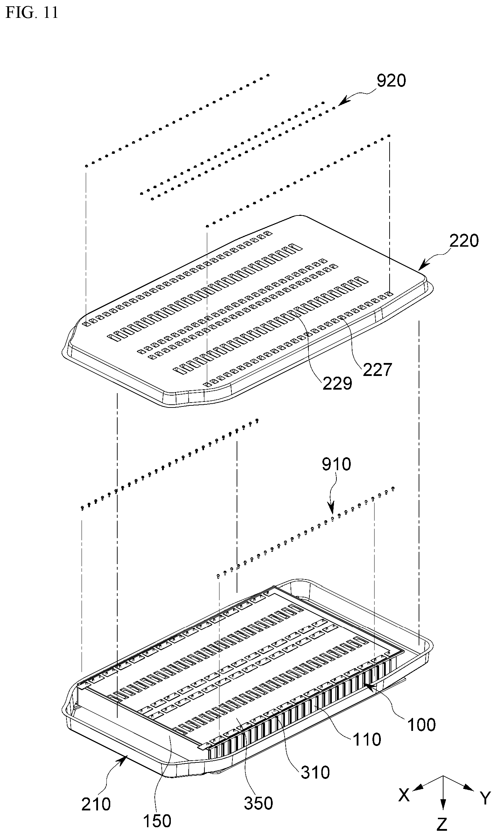

FIG. 11 illustrates a state in which the lower case 220 is coupled to the upper case 210 that accommodates the plurality of battery cell assemblies 100.

As shown in FIG. 11, the lower case 220 is coupled to the upper case 210 to cover the lower surface of the plurality of battery cell assemblies 100. In addition, according to an embodiment of the disclosure, the lower case 220 is formed of a transparent material. For example, the lower case 220 may be formed of a transparent polymer.

Meanwhile, although not shown, the edges of the upper case 210 and the lower case 220 may also be detachably connected through a coupling unit, such as a bolt.

Also, although not shown, a gasket may be interposed between the edge of the upper case 210 and the edge of the lower case 220.

According to an embodiment of the disclosure, although the upper case 210 and the lower case 220 are coupled to each other, the lower case 220 is formed of a transparent material and the cell cover 150 does not cover the lower surface of the battery cell 110, and thus, the state of the battery cell 110 may be easily identified through the lower case 220 without separating the lower case 220.

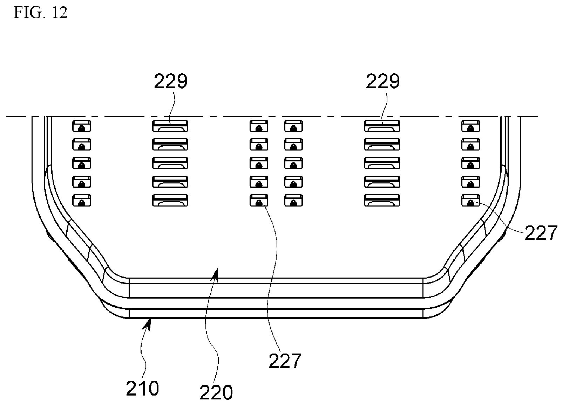

FIG. 12 is a diagram illustrating a plurality of cell inspection holes 227 and a plurality of vent holes 229 formed in the lower case 220.

Referring to FIG. 12, a plurality of cell inspection holes 227 for inspecting the battery cell 110 and a plurality of vent holes 229 for gas discharge may be formed in the lower case 220.

Therefore, an inspection connector of an inspection device may be connected to the battery cell 110 while the battery cell 110 is surrounded by the cell cover 150 even without separating the lower case 220 through the cell inspection holes 227 of the lower case 220. Here, a plurality of terminal nuts 920 may be connected to the lower surface of the battery cell 110 through the plurality of cell inspection holes 227 of the lower case 220. The terminal nuts 920 help connect the inspection connector and the battery cell 110.

In this manner, according to an embodiment of the disclosure, not only may the battery cell 110 be easily inspected visually through the transparent lower case 220 without separating the lower case 220, but also the inspection connector may be connected to the battery cell 110.

In addition, the venting gas generated in the battery cell 110 may be easily discharged to the outside of the battery pack 101 through the vent hole 229 of the lower case 220.

In addition, as described above, the accommodation space formed by the upper case 210 and the lower case 220 includes a cell accommodation region 211 and a venting region 212, and the venting region 212 may also serve as a buffer that temporarily accommodates the venting gas discharged from the battery cell 110 but not discharged through the vent hole 229 of the lower case 220.

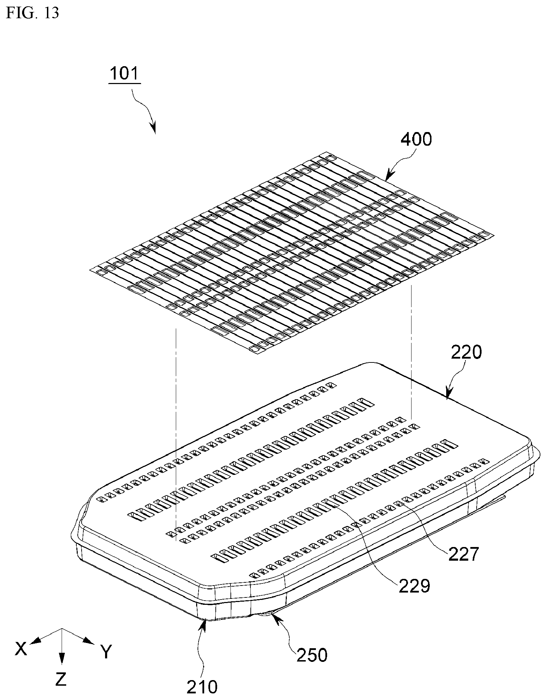

FIG. 13 illustrates a state in which a lower cover member 400 is attached to the lower case 220.

The lower cover member 400 may be detachably attached to an outer surface of the lower case 220 to cover the plurality of cell inspection holes 227.

That is, since the battery cell 110 or the terminal nut 920 coupled to the battery cell may be exposed as it is through the cell inspection hole 227 of the lower case 220, the cell inspection hole 227 of the lower case 220 may be covered through the lower cover member 400, and an inspection may be performed by detaching the lower cover member 400 during inspection.

For example, the lower cover member 400 has a grommet structure and may be fitted into the cell inspection hole 227 of the lower case 220 so as to be detachably coupled.

Meanwhile, it is obvious that the battery pack 101 according to an embodiment of the disclosure may be disassembled in the reverse order of the assembly process described above.

That is, the battery pack 101 according to an embodiment of the disclosure may easily identify the battery cell 110 with an abnormality among the plurality of battery cells 110, and it is easy to selectively replace only the battery cell 110 with an abnormality.

In addition, the battery pack 101 according to an embodiment of the disclosure configured in this manner may be applied to various devices. Specifically, the battery pack 101 may be applied to transportation means, such as an electric bicycle, an electric vehicle 1, a hybrid vehicle, or an energy storage system (ESS), but is not limited thereto, and may be applied to various devices that may use secondary batteries.

With this configuration, it is easy to diagnose whether a plurality of battery cells 110 are abnormal, and it is also possible to selectively replace a battery cell with an abnormality among a plurality of battery cells 110.

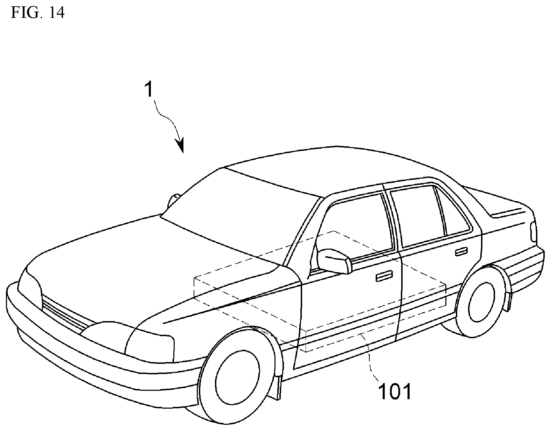

FIG. 14 is a diagram illustrating the vehicle 1 including the battery pack 101 of FIG. 1.

Referring to FIG. 14, the vehicle 1 according to an embodiment of the disclosure may include at least one battery pack 101 according to an embodiment of the disclosure. The vehicle 1 according to an embodiment of the disclosure may be, for example, an electric vehicle, a hybrid vehicle, or a plug-in hybrid vehicle, and includes the battery pack 101 according to an embodiment of the disclosure. The vehicle 1 includes a four-wheeled vehicle and a two-wheeled vehicle. The vehicle 1 operates upon receiving power from the battery pack 101 according to an embodiment of the disclosure. In addition, the vehicle 1 according to an embodiment of the disclosure may further include various other components included in the vehicle 1 in addition to the battery pack 101. For example, the vehicle 1 according to an embodiment of the disclosure may further include a vehicle body, a motor, an electronic control unit (ECU), etc. in addition to the battery pack 101 according to an embodiment of the disclosure.

Meanwhile, although terms indicating directions, such as up and down, are used in this specification, it is obvious to those skilled in the art that these terms are only for the convenience of description and may vary depending on a location of a target object or a location of an observer.

Although the disclosure has been described above with limited embodiments and drawings, the disclosure is not limited thereto, and it is obvious that various modifications and variations may be made within the scope of the technical idea of the disclosure and the equivalent scope of the claims to be described below by those skilled in the art.

### [DESCRIPTION OF REFERENCE NUMERALS]

1: vehicle
100: battery cell assembly
101: battery pack
110: battery cell
130: thermal interface material
140: insulating plate
150: cell cover
151: first cover portion
152: second cover portion
153: third cover portion
155: cover coupling portion
210: upper case
220: lower case
227: cell inspection hole
229: vent hole
250: cooling plate
310: busbar
350: busbar frame
400: lower cover member
710: battery management system
720: battery disconnect unit
910: coupling bolt
920: terminal nut

### [INDUSTRIAL APPLICABILITY]

The disclosure may be used to provide a battery pack in which whether a plurality of battery cells are abnormal may be easily diagnosed and a battery cell in which an abnormality has occurred among the plurality of battery cells may be selectively replaced.

## Claims

1. A battery pack comprising:
a plurality of battery cell assemblies, each including a battery cell and a cell cover covering three surfaces of the battery cell except for a lower surface;
an upper case to which the plurality of battery cell assemblies are separately detachably coupled; and
a lower case coupled to the upper case and covering a lower surface of the plurality of battery cell assemblies and formed of a transparent material.

2. The battery pack of claim 1, wherein
the cell cover includes:
a first cover portion covering one side surface of the battery cell;
a second cover portion covering the other side surface of the battery cell; and
a third cover portion connecting the first cover portion and the second cover portion and covering an upper surface of the battery cell.

3. The battery pack of claim 2, wherein the plurality of battery cell assemblies each further include a non-adhesive thermal interface material (TIM) interposed between the third cover portion of the cell cover and the battery cell.

4. The battery pack of claim 2, wherein the cell cover further includes a cover coupling portion formed to extend from each of a front end portion and a rear end portion of the third cover portion.

5. The battery pack of claim 4, further comprising a plurality of coupling bolts detachably coupling the cover coupling portion of the cell cover and the upper case.

6. The battery pack of claim 5, further comprising a cooling plate coupled to end portions of the plurality of coupling bolts penetrating through the upper case from the outside of the upper case.

7. The battery pack of claim 6, wherein the plurality of coupling bolts and the cooling plate are formed of a thermally conductive material.

8. The battery pack of claim 1, wherein
the plurality of battery cell assemblies are stacked with sides surfaces facing each other,
wherein the battery pack further comprising:
an insulating plate interposed between the cell covers of the plurality of stacked battery cell assemblies.

9. The battery pack of claim 1, further comprising:
a busbar coupled to a lower surface of the battery cell; and
a busbar frame supporting the busbar.

10. The battery pack of claim 9, wherein the cell cover is detachably coupled to the busbar frame using a snap-fit method.

11. The battery pack of claim 1, wherein the lower case is provided with a plurality of cell inspection holes for inspecting the battery cell and a plurality of vent holes for gas discharge.

12. The battery pack of claim 11, further comprising a terminal nut coupled to the lower surface of the battery cell through the plurality of cell inspection holes of the lower case.

13. The battery pack of claim 11, further comprising a lower cover member detachably attached to an outer surface of the lower case and covering the plurality of cell inspection holes.

14. The battery pack of claim 1, wherein
a space formed by the upper case and the lower case includes:
a cell accommodation region accommodating the plurality of battery cell assemblies; and
a venting region provided on at least one side among both sides of the cell accommodation region for gas discharge.

15. The battery pack of claim 1, further comprising
one or more of a battery management system (BMS) and a battery disconnect unit (BDU) accommodated within a space formed by the upper case and the lower case.

16. A vehicle comprising at least one of the battery pack described in any one of claims 1 to 15.
